# EUROPÄISCHE PATENTANMELDUNG

(11) **EP 2 995 228 A1**
(43) Veröffentlichungstag der Anmeldung: **16.03.2016**
(21) Anmeldenummer: 14184255.9
(22) Anmeldetag: 10.09.2014
(51) Int. Cl.: A47J 36/28, A45C 5/02, A45C 11/20, A45C 15/00, B65D 81/34

(54) **Vorrichtung zum Erwärmen eines Stoffs oder Stoffgemischs**

(71) Anmelder: Arnold, Uwe, 67069 Ludwigshafen (DE)
(72) Erfinder: Arnold, Uwe, 67069 Ludwigshafen (DE)
(74) Vertreter: Zenz Patentanwälte Partnerschaft mbB

(57) **Zusammenfassung**

Eine Vorrichtung zum Erwärmen eines Stoffes oder Stoffgemischs umfasst einen Aufnahmeraum (1) für den Stoff oder das Stoffgemisch (2) und einen daran angrenzenden Erhitzungsraum (3), der über eine gemeinsame wärmeleitende Wandung (4) mit dem Aufnahmeraum (1) thermisch gekoppelt und zugleich fluiddicht von diesem getrennt ist. Der Erhitzungsraum (3) enthält ein Granulat eines Adsorptionsmittels, das sich beim Einwirken eines Fluids erhitzt, wobei dabei entstehende Wärme auf die Wandung (4) und von dieser auf den zu erwärmenden Stoff bzw. das Stoffgemisch (2) übertragen wird. Die Oberfläche der wärmeleitenden Wandung (4) ist auf der Seite des Erhitzungsraums (3) mit Partikeln (6) des Granulats besetzt, welche an der Oberfläche der Wandung (4) derart befestigt sind, dass benachbart zu der gesamten mit den Partikeln (6) besetzten Wandung (4) ein gasgefüllter Raum (8) innerhalb des Erhitzungsraums (3) verbleibt, durch den das Fluid an die Partikel (6) herangeführt werden kann. Ferner ist eine Einrichtung (10-12; 15-18; 19) zum Erzeugen eines auf die Partikel (6) einwirkenden Fluidstroms (9) innerhalb des gasgefüllten Raums (8) vorgesehen. Vorzugsweise ist die Oberfläche der Wandung (4) einschichtig mit den Partikeln (6) derart besetzt, dass diese überwiegend nur nebeneinander auf der Oberfläche aufliegen.

## Beschreibung

Die Erfindung betrifft eine Vorrichtung zum Erwärmen eines Stoffes oder Stoffgemischs, mit einem Aufnahmeraum zum Aufnehmen des zu erwärmenden Stoffes oder Stoffgemischs und einem an den Aufnahmeraum angrenzenden Erhitzungsraum, der über eine gemeinsame wärmeleitende Wandung mit dem Aufnahmeraum thermisch gekoppelt und zugleich fluiddicht von diesem getrennt ist, wobei der Erhitzungsraum ein Granulat eines Adsorptionsmittels enthält, wobei sich das Adsorptionsmittel beim Einwirken eines Fluids erhitzt und dabei entstehende Wärme auf die Wandung und von dieser auf den zu erwärmenden Stoff oder das zu erwärmende Stoffgemisch übertragen wird.

Eine derartige Vorrichtung, die zum Erhitzen von Lebensmitteln dient, ist beispielsweise aus den Druckschriften EP 2 710 941 A1 oder WO 2014/044609 A1 bekannt. Die bekannte transportable Vorrichtung zum Erhitzen von Lebensmitteln weist einen Behälter zum Aufnehmen der Lebensmittel und einen an der Behälter angrenzenden abgeschlossenen Erhitzungsraum auf, der über eine gemeinsame wärmeleitende Wandung mit dem Behälter thermisch gekoppelt und zugleich hermetisch von diesem getrennt ist. Der Erhitzungsraum der bekannten Vorrichtung weist zwei Kammern auf, die durch eine wasserdampfdurchlässige Wandung getrennt sind. In der unteren Kammer befindet sich ein Stoffgemisch, das Calciumdioxid umfasst und das bei Zufuhr einer vorgegebenen Menge Wasser in einer exothermen Reaktion Wasserdampf bildet. Die obere Kammer, die an die Wandung des die Lebensmittel enthaltenden Behälters angrenzt, ist mit einem Adsorptionsmittel in Form eines Granulats von Zeolith-Kügelchen gefüllt. Der bei der exothermen Reaktion in der unteren Kammer gebildete Wasserdampf durchdringt die wasserdampfdurchlässige Wandung und tritt von unten in die mit Zeolith-Kügelchen gefüllte obere Kammer ein. Dabei adsorbiert das Zeolith das Wasser, was zu einer Erhitzung des Zeoliths führt. Diese Wärme soll über die wärmeleitende Wandung an das Lebensmittel abgegeben werden.

Die bekannte Vorrichtung hat den Nachteil, dass die in der oberen Kammer enthaltene Schüttung von Zeolith-Kügelchen die Wärme schlecht leitet. Darüber hinaus wurde festgestellt, dass zunächst die in der Nähe der wasserdampfdurchlässigen Wandung angeordneten Zeolith-Kügelchen das eintretende Wasser adsorbieren, dadurch aber das Wasser nur verzögert durch die Zwischenräume zwischen den Zeolith-Partikeln hindurch zu denjenigen Bereichen der Zeolith-Schüttung vordringt, die sich in der Nähe der wärmeleitenden Wandung zum Lebensmittel-Behälter oder an den Seitenwandungen befinden. Dadurch ist nur eine verzögerte und schlechtere Erwärmung der Lebensmittel möglich.

Es ist daher wünschenswert, eine bessere Erhitzung der in der Nähe der wärmeleitenden Wandung zum Lebensmittel-Behälter angeordneten Zeolith-Partikel und eine bessere Wärmeübertragung auf die wärmeleitende Wandung zu erreichen.

Diese Aufgabe wird erfindungsgemäß durch eine Vorrichtung zum Erwärmen eines Stoffes oder Stoffgemischs mit den Merkmalen des Anspruchs 1 gelöst.

Die Vorrichtung zum Erwärmen eines Stoffes oder Stoffgemischs weist einen Aufnahmeraum zum Aufnehmen des zu erwärmenden Stoffes oder Stoffgemischs und einem an den Aufnahmeraum angrenzenden Erhitzungsraum auf, der über eine gemeinsame wärmeleitende Wandung mit dem Aufnahmeraum thermisch gekoppelt und zugleich fluiddicht von diesem getrennt ist. Der Aufnahmeraum kann offen oder geschlossen sein; der zu erwärmende Stoff bzw. das Stoffgemisch kann beispielsweise darin ruhen oder sich an der wärmeleitenden Wandung entlang bewegen. Der Erhitzungsraum kann offen sein, ist aber vorzugsweise geschlossen, so dass keine Stoffe entweichen können. Der Erhitzungsraum enthält ein Granulat eines Adsorptionsmittels, wobei sich das Adsorptionsmittel beim Einwirken eines Fluids erhitzt und dabei entstehende Wärme auf die Wandung und von dieser auf den zu erwärmenden Stoff oder das zu erwärmende Stoffgemisch übertragen wird. Unter einem Granulat soll hier jedes granulare Medium mit Partikeln oder Körnern beliebiger Form verstanden werden. Das Fluid kann ein beliebiges Gas, ein Dampf und/oder eine Flüssigkeit sein, das, der bzw. die von dem Adsorptionsmittel unter Wärmebildung adsorbiert werden kann. Erfindungsgemäß ist diese Vorrichtung dadurch gekennzeichnet, dass die Oberfläche der wärmeleitenden Wandung auf der Seite des Erhitzungsraums mit Partikeln des Granulats des Adsorptionsmittels besetzt ist, welche an der Oberfläche der Wandung derart befestigt sind, dass benachbart zu der gesamten mit den Partikeln besetzten Wandung ein gasgefüllter Raum innerhalb des Erhitzungsraums verbleibt, durch den das Fluid an die Partikel herangeführt werden kann, wobei sich die Partikel erhitzen, und dass die Vorrichtung eine Einrichtung zum Erzeugen eines auf die Partikel einwirkenden Fluidstroms innerhalb des gasgefüllten Raums aufweist. Der gasgefüllte Raum kann mit einem beliebigen Gas, beispielsweise einfach mit Luft oder einem inerten Gas, wie z.B. Stickstoff, gefüllt sein, das auch verdünnt sein kann, so dass der Raum unter Unterdruck steht, beispielsweise evakuiert ist. Der gasgefüllte Raum ist so ausgebildet und angeordnet, dass das in ihm heranführbare Fluid im Wesentlichen die gesamte zu erwärmende mit Partikeln des Adsorptionsmittels besetzte Wandung erreichen kann. Der gasgefüllte Raum hat neben seiner Funktion als Fluid-Transportkanal zugleich den Vorteil, dass er eine thermische Isolation zwischen der mit Partikeln des Adsorptionsmittels besetzten wärmeleitenden Wandung und der Außenseite des Erhitzungsraums schafft, was den thermischen Wirkungsgrad der erfindungsgemäßen Vorrichtung gegenüber der eingangs beschriebenen Vorrichtung des Standes der Technik erheblich verbessert. Die erfindungsgemäße Vorrichtung hat im Vergleich zu dem eingangs beschriebenen Stand der Technik, bei dem das Granulat des Adsorptionsmittels in eine dafür bereitgestellte Kammer geschüttet wird und diese praktisch ausfüllt, den weiteren Vorteil, dass nur geringere Mengen des Granulats des Adsorptionsmittels benötigt werden.

Bei einer bevorzugten Weiterbildung der Vorrichtung ist der Erhitzungsraum eine im Wesentlichen geschlossene Erhitzungskammer und ist der gasgefüllte Raum ein spaltförmiger Raum, der zwischen der mit den Partikeln besetzten Wandung und einer äußeren Wandung der Erhitzungskammer angeordnet ist. Dies gestattet eine geringe Gesamtgröße der Vorrichtung. Der als schmaler Spaltraum ausgebildete gasgefüllte Raum muss selbstverständlich breit genug sein, um ein Heranströmen des Fluids zu ermöglichen. "Im Wesentlichen geschlossen" besagt hier, dass die Erhitzungskammer vorzugsweise derart geschlossen ist, dass ein Austreten von Adsorptionsmittel-Partikeln oder anderen Stoffen vermieden wird; es können aber kleine Öffnungen vorgesehen sein, die entweder einem Abbau eines Überdrucks in der Erhitzungskammer dienen oder einer Lenkung oder Verstärkung des Fluidstroms, indem es ermöglicht wird, dass Teile des Fluids nach Passieren der mit den Adsorptionsmittelpartikeln besetzten Wandungsflächen aus der Erhitzungskammer austreten.

Bei einer bevorzugten Ausführungsform weist die Einrichtung zum Erzeugen eines auf die Partikel einwirkenden Fluidstroms einen Reaktionsraum auf, der innerhalb des Erhitzungsraums untergebracht ist, an den gasgefüllten Raum angrenzt und einen Stoff oder ein Stoffgemisch enthält, der bzw. das bei Zufuhr einer Flüssigkeit in einer exothermen Reaktion Wärme erzeugt, wobei Wasserdampf gebildet wird. Der Reaktionsraum grenzt an den gasgefüllten Raum derart an, dass der im Reaktionsraum gebildete Wasserdampf in den gasgefüllten Raum übertreten kann. Ferner weist die Einrichtung zum Erzeugen eines auf die Partikel einwirkenden Fluidstroms eine Vorrichtung zum Einbringen der Flüssigkeit in den Reaktionsraum auf. Auf diese Weise wird einerseits eine einfache Möglichkeit zum Heranführen des zu adsorbierenden Fluids, in diesem Falle Wasserdampf, an die Partikel des Adsorptionsmittels geschaffen, andererseits unterstützt die bei der exothermen Reaktion erzeugte Wärme das Erwärmen des zu erwärmenden Stoffes oder Stoffgemischs im Aufnahmeraum.

Der Reaktionsraum kann eine direkte Verbindung, z.B. eine Öffnung, zu dem gasgefüllten Raum aufweisen; er kann auch durch eine Wandung von dem gasgefüllten Raum getrennt sein, wobei die Wandung vor dem oder auch durch das Einsetzen der exothermen Reaktion geöffnet oder zerstört wird. Bei einer Ausführungsform ist der Reaktionsraum eine Reaktionskammer, die von dem den gasgefüllten Raum und die Partikel des Adsorptionsmittels enthaltenden Teil des Erhitzungsraums durch eine wasserdampfdurchlässige Wandung getrennt ist. Diese Art der Trennung hat den Vorteil, dass der Stoff oder das Stoffgemisch in der Reaktionskammer, der bzw. das bei Zufuhr einer Flüssigkeit in einer exothermen Reaktion Wärme erzeugt, zumindest vor der Reaktion nicht in Kontakt zu dem Adsorptionsmittel gelangen können. Außerdem ist es bei dieser Ausführungsform möglich, den Stoff oder das Stoffgemisch, der bzw. das bei Zufuhr einer Flüssigkeit in einer exothermen Reaktion Wärme erzeugt, hermetisch in der Reaktionskammer zu verpacken und so vor Umgebungseinflüssen zu schützen.

Vorzugsweise ist die in den Reaktionsraum einzubringende Flüssigkeit Wasser und umfasst der Stoff oder das Stoffgemisch in dem Reaktionsraum, der bzw. das bei Zufuhr der Flüssigkeit in einer exothermen Reaktion Wärme erzeugt, Calciumoxid. Dies schafft eine preiswerte Möglichkeit einer Wasserdampf bereitstellenden exothermen Reaktion, die eine große Wärmemenge erzeugen kann. Außerdem sind die Reaktionspartner und -produkte ungiftig.

Eine bevorzugte Weiterbildung der Erfindung ist dadurch gekennzeichnet, dass der Aufnahmeraum der Innenraum eines topfförmigen Behälters ist, dass die an den Erhitzungsraum angrenzende wärmeleitende Wandung die Bodenwandung und zumindest Teile der Seitenwandung des topfförmigen Behälters bildet, und dass die Oberfläche der Seitenwandung und eines Teils der oder der gesamten Bodenwandung mit den Partikeln des Adsorptionsmittels besetzt ist. Dies schafft eine einfach herzustellende Anordnung. Bei dieser Ausführungsform kann es vorzugsweise vorgesehen sein, dass ein Teil der Bodenwandung mit den Partikeln des Adsorptionsmittels besetzt ist und der nicht von den Partikeln des Adsorptionsmittels besetzte Teil oberhalb des Reaktionsraums angeordnet ist. Hier wird der Umstand ausgenutzt, dass in der unterhalb der Bodenwandung angeordneten Reaktionskammer Wärme erzeugt wird, die dann direkt auf die Bodenwandung übertragen werden kann. In diesem Bereich der Bodenwandung kann auch der Besatz mit Partikeln des Adsorptionsmittels entfallen, was wiederum einen besseren thermischen Kontakt zur Reaktionskammer ermöglicht.

Vorzugsweise ist das Adsorptionsmittel ein Zeolith und sind die Partikel Zeolithkugeln oder -körner. Diese Adsorptionsmittel können - bei geeigneter Auswahl - große Mengen an Adsorptionswärme bereitstellen, sind ungiftig und stehen in ausreichender Menge zur Verfügung. Vorzugsweise enthält das an die Zeolithkugeln oder -körner herangeführte Fluid Wasserdampf. Dies gestattet eine preiswerte und darüber hinaus eine zum Erwärmen von Lebensmitteln geeignete Gestaltung der Vorrichtung. Bevorzugt werden hier Zeolithkugeln oder -körner, die bindemittelfrei sind und eine hohe Wasseraufnahmefähigkeit besitzen, beispielsweise das bindemittelfreie Zeolith KÖSTROLITH^{®} 13XBFK der Chemiewerk Bad Köstritz GmbH.

Bei einem bevorzugten Ausführungsbeispiel sind die Partikel auf die Oberfläche der wärmeleitenden Wandung aufgeklebt. Aufgrund von Versuchen wurde überraschenderweise und entgegen eines verbreiteten Vorurteils gefunden, dass Partikel eines Granulats eines Adsorptionsmittels, insbesondere Kügelchen eines Zeoliths, auf eine Wandungsoberfläche aufgeklebt werden können. Vorzugsweise sind die Partikel auf die Oberfläche der wärmeleitenden Wandung mit einem Klebstoff aufgeklebt, der im Wesentlichen wasser- und lösungsmittelfrei ist. Die Verwendung eines solchen Klebstoffs vermeidet die Notwendigkeit einer Aktivierung des Adsorptionsmittels nach Adsorption von Teilen des Wassers und/oder Lösungsmittels des Klebstoffs durch ein nachfolgendes Erhitzen der aufgeklebten Adsorptionsmittel-Partikel und Entweichen-Lassen der dabei austretenden Dämpfe. Bevorzugt sind die Partikel derart aufgeklebt, dass der Klebstoff nur einen geringen Teil der Oberfläche der Partikel benetzt. Ein geeignetes Herstellungsverfahren umfasst beispielsweise das Aufbringen einer Klebstoffschicht auf die Außenseite eines den Aufnahmeraum umschließenden Behälters und das anschließende Eintauchen des mit Klebstoff beschichteten Behälters in eine lose Schüttung aus Adsorptionsmittel-Granulat.

Die Oberfläche der wärmeleitenden Wandung kann so mit den Partikeln besetzt sein, dass auch jeweils zwei oder mehr Partikel oder Partikelschichten versetzt übereinander angeordnet sind. Vorzugsweise jedoch ist die Oberfläche der wärmeleitenden Wandung einschichtig mit den Partikeln derart besetzt, dass die Partikel überwiegend nur nebeneinander auf der Oberfläche der wärmeleitenden Wandung aufliegen. Dies schafft einen guten Kontakt der sich erwärmenden Partikel zu der Wandungsoberfläche bei geringem Materialverbrauch.

Bei bevorzugten Ausführungsbeispielen ist der Stoff oder das Stoffgemisch, der bzw. das im Aufnahmeraum zu erwärmen ist, ein Lebensmittel, beispielsweise ein Getränk, ein Eintopf oder ein Fertiggericht.

Vorteilhafte und/oder bevorzugte Weiterbildungen der Erfindung sind in den Unteransprüchen gekennzeichnet.

Im Folgenden wird die Erfindung anhand von in den Zeichnungen dargestellten bevorzugten Ausführungsbeispielen näher erläutert. In den Zeichnungen zeigen:

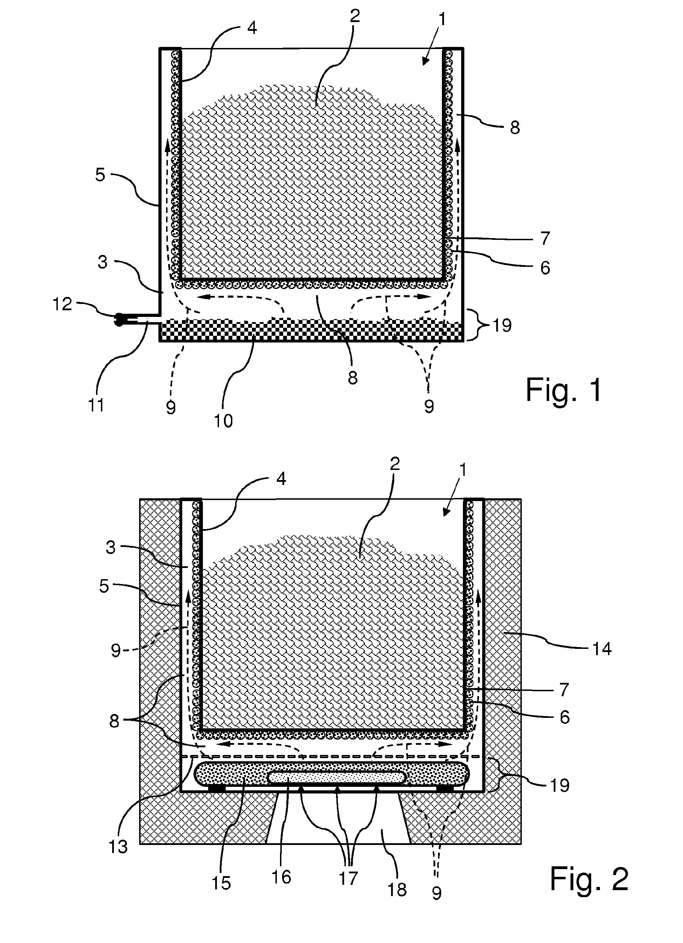

Figur 1 eine schematische Schnittansicht eines ersten Ausführungsbeispiels der erfindungsgemäßen Vorrichtung zum Erwärmen eines Stoffes oder Stoffgemischs in einem Aufnahmeraum, bei dem eine geschlossene Erhitzungskammer den Aufnahmeraum umgibt und von diesem durch eine wärmeleitende Wandung getrennt ist, ein Reaktionsraum Teil der Erhitzungskammer ist und sich ein gasgefüllter Raum innerhalb der Erhitzungskammer ohne physische Abtrennung oben an den Reaktionsraum anschließt;
Figur 2 eine schematische Schnittansicht einer zweiten Ausführungsform der erfindungsgemäßen Vorrichtung zum Erwärmen eines Stoffes oder Stoffgemischs, bei dem der Reaktionsraum durch eine wasserdampfdurchlässige Wandung von dem gasgefüllten Raum innerhalb der Erhitzungskammer abgetrennt ist; und

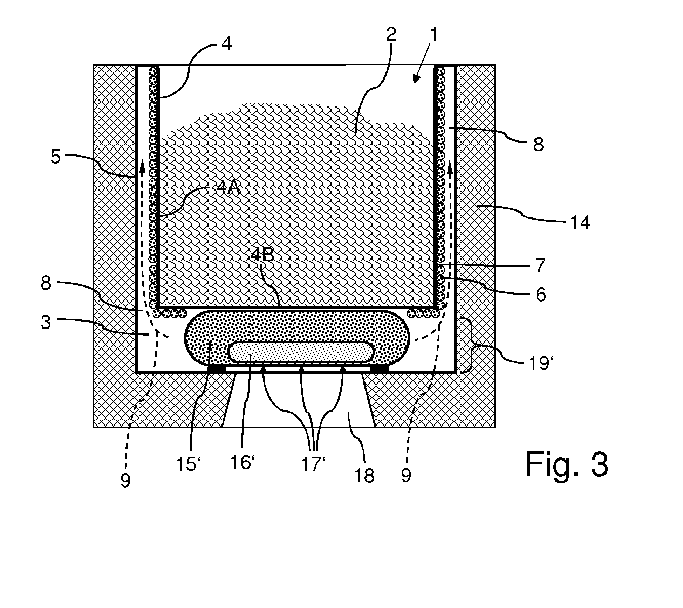

Figur 3 eine dritte Ausführungsform der erfindungsgemäßen Vorrichtung zum Erwärmen eines Stoffes oder Stoffgemischs, bei dem sich der Reaktionsraum unmittelbar an den Boden des Aufnahmeraums anschließt und der oberhalb des Reaktionsraums befindliche Teil der wärmeleitenden Wandung nicht mit Partikeln des Adsorptionsmittels besetzt ist.

Figur 1 zeigt eine erste Ausführungsform der erfindungsgemäßen Vorrichtung zum Erwärmen eines Stoffes oder Stoffgemischs 2, vorzugsweise eines Lebensmittels, wie beispielsweise ein Fertiggericht. Der zu erwärmende Stoff bzw. das zu erwärmende Stoffgemisch 2 befindet sich in einem Aufnahmeraum 1 in Form eines topfförmigen Behälters. Nicht in Figur 1 dargestellt ist eine ggf. vorhandene Abdeckung des Behälters. Der Behälter ist bei dem in Figur 1 dargestellten Ausführungsbeispiel doppelwandig ausgebildet. Zwischen einer inneren Wandung 4 und einer äußeren Wandung 5 ist ein als Erhitzungsraum 3 dienendes Volumen ausgebildet. Der Erhitzungsraum 3 und der Aufnahmeraum 1 haben eine gemeinsame wärmeleitende Wandung 4. Die Wandung 4 besteht aus einem gut wärmeleitenden Material, beispielsweise einem Metall, das die Wärme aus der Erhitzungskammer 3 zu dem Stoff/Stoffgemisch 2 im Aufnahmeraum 1 übertragen kann. Die der Erhitzungskammer 3 zugewandte Seite der wärmeleitenden Wandung 4 ist mit Partikeln 6 eines Granulats eines Adsorptionsmittels besetzt; vorzugsweise sind Kügelchen eines Zeoliths auf diese Wandung 4 mit Hilfe eines Klebstoffs 7 aufgeklebt. Vorzugsweise ist die Oberfläche der Wandung 4 dicht mit den Partikeln 6 des Adsorptionsmittels, insbesondere den Kügelchen des Zeoliths, besetzt, so dass die Partikel 6 überwiegend nebeneinander angeordnet sind. Die Klebstoffschicht 7 ist vorzugsweise derart dünn, so dass sie die aufgeklebten Partikel 6 nur im wandungsnahen Bereich benetzt. Als geeignetes Adsorptionsmittel wird beispielsweise ein bindemittelfreies Zeolith, insbesondere das Zeolith KÖSTROLITH^{®} 13XBFK der Chemiewerk Bad Köstritz GmbH verwendet, als Klebstoff ein im Wesentlichen wasserfreier und lösungsmittelfreier Klebstoff verwendet, wie beispielsweise ein Zweikomponenten-Polyurethan-Klebstoff. Die Erhitzungskammer 3 ist so geformt, dass sich benachbart zu der mit den Partikeln 6 des Adsorptionsmittels besetzten Wandung 4 ein gasgefüllter Raum 8 ausbildet, der sich unterhalb des Bodenabschnitts der Wandung 4 und seitlich neben den Seitenabschnitten der Wandung 4 erstreckt. Am Boden der topfförmigen Außenwandung 5 innerhalb der Erhitzungskammer 3 befindet sich ein Stoff oder ein Stoffgemisch, der bzw. das bei Zugabe einer Flüssigkeit in einer exothermen Reaktion Wärme erzeugen kann. Der Stoff oder das Stoffgemisch können von derselben Art sein, wie sie in der Druckschrift WO 2014/044609 A1 oder der Druckschrift EP 2 710 941 A1 beschrieben sind. Vorzugsweise enthält das Stoffgemisch Calciumoxid und ist die zuzuführende Flüssigkeit Wasser. Das Wasser kann bei dem in Figur 1 gezeigten Ausführungsbeispiel durch eine die Erhitzungskammer 3 verschließende Öffnung 11, die durch ein selbstschließendes Ventil 12 verschlossen ist, zugeführt werden. Beispielsweise kann Wasser durch eine durch die Öffnung 11 eingeführte Kanüle eingespritzt werden. Sobald Wasser in den das Calciumoxid enthaltenden Reaktionsraum 19 eingebracht worden ist, beginnt eine exotherme Reaktion zwischen dem Wasser und dem Calciumoxid, bei der neben der Wärme auch Wasserdampf freigesetzt wird. Der Wasserdampf strömt aufwärts zunächst zur Bodenwandung des Aufnahmeraums 1 und dann seitlich parallel zu den Seitenwandungen nach oben, was durch die Pfeile 9 angedeutet ist, wobei der Wasserdampf in Kontakt mit den auf die Wandung 4 aufgeklebten Partikeln 6 des Adsorptionsmittels gelangt. Die Partikel 6 des Adsorptionsmittels adsorbieren den Wasserdampf, wobei Wärme entsteht. Die entstehende Wärme wird durch die Wandung 4 hindurch auf den zu erwärmenden Stoff 2 bzw. das zu erwärmende Stoffgemisch 2 geleitet. Nur ein geringerer Teil der von dem Adsorptionsmittel gebildeten Wärme gelangt infolge Wärmestrahlung und/oder Konvektion zur Außenwandung 5 der Erhitzungskammer 3. Der größte Teil der Wärme wird nach innen in den Aufnahmebehälter 1 abgegeben.

Figur 2 zeigt ein alternatives Ausführungsbeispiel der erfindungsgemäßen Vorrichtung zum Erwärmen eines Stoffes oder Stoffgemischs 2. In den Figuren 1 und 2 sind gleiche oder vergleichbare Elemente mit denselben Bezugsziffern gekennzeichnet. Ein Aufnahmebehälter 1 enthält wiederum den zu erwärmenden Stoff bzw. das zu erwärmende Stoffgemisch 2. Die Wandung 4 zwischen einer Erhitzungskammer 3 und dem Aufnahmeraum 1 ist wiederum auf der Seite der Erhitzungskammer 3 mit Partikeln 6 eines Adsorptionsmittels, vorzugsweise mit Kügelchen eines Zeoliths, besetzt, wobei die Partikel 6 mittels eines Klebstoffs 7 aufgeklebt sind.

Ein erster Unterschied zwischen der Ausführungsform gemäß Figur 2 und der gemäß Figur 1 besteht darin, dass die Außenwand 5 der Erhitzungskammer 3 von einer Wärmeisolationsschicht 14 umgeben ist. Diese gewährleistet, dass ein größerer Anteil der erzeugten Wärme dem in dem Aufnahmeraum 1 enthaltenen Stoff oder Stoffgemisch 2 zugeführt wird.

Ein zweiter Unterschied besteht darin, dass der Stoff oder das Stoffgemisch, der bzw. das bei Flüssigkeitszugabe in einer exothermen Reaktion Wärme erzeugt, innerhalb eines Reaktionsraums 19 in einem Beutel oder einer ähnlichen Verpackung 15 untergebracht ist. Darüber hinaus ist der Reaktionsraum eine Reaktionskammer 19, die von dem gasgefüllten Raum 8 der Erhitzungskammer 3 durch eine wasserdampfdurchlässige Wandung 13 getrennt ist. Die Verpackung 15 mit dem Stoff oder Stoffgemisch enthält außerdem einen weiteren Beutel mit Wasser 16, dessen Wandung den Wasservorrat hermetisch einschließt, so dass dieser nicht in Kontakt zu dem exotherm reagierenden Stoff 15 gelangen kann. Der Wasserbeutel 16 ist innerhalb des Reaktionsraums 19 über einer Reihe von Dornen 17 angeordnet, wobei die Dorne 17 mit ihren Spitzen nach oben an der inneren Bodenwandung der Erhitzungskammer 3 befestigt sind. Unterhalb der Bodenwandung der Erhitzungskammer 3 ist in der Wärmeisolationsschicht 14 eine Ausnehmung 18 vorgesehen. Über diese Ausnehmung 18 kann ein Bediener einen leichten Druck gegen die Bodenwandung erzeugen, der aufgrund der Anordnung der Dorne 17 und des Wasserbeutels 16 dazu führt, dass der Wasserbeutel aufgerissen wird, so dass das Wasser sich mit dem Reaktionspartner vermischen und in einer exothermen Reaktion unter anderem Wasserdampf erzeugen kann. Der bei der exothermen Reaktion gebildete Wasserdampf strömt (entlang der Pfeile 9) durch den gasgefüllten Raum 8 bis hin zu den Partikeln 6 des Adsorptionsmittels. Die Adsorption des Wassers führt wiederum zur Wärmebildung, wobei die Wärme wiederum durch die Wandung 4 auf das Stoffgemisch 2 übertragen wird.

Es sind auch Ausführungsformen denkbar, die die in Figur 1 gezeigte Form der Wasserzuführung und die in Figur 2 gezeigte wasserdampfdurchlässige Trennwand 13 und/oder die Aufnahme des exotherm reagierenden Stoffes oder Stoffgemischs in einen Beutel oder eine ähnliche Verpackung und/oder die zusätzliche Wärmeisolationsschicht 14 in beliebiger Weise kombinieren.

Figur 3 zeigt eine dritte Ausführungsform der erfindungsgemäßen Vorrichtung zum Erwärmen eines Stoffes oder Stoffgemischs, die sich von der in Figur 2 gezeigten Ausführungsform dadurch unterscheidet, dass hier auf die wasserdampfdurchlässige Trennwand 13 verzichtet wird. Außerdem ist der Beutel oder die Verpackung 15' mit der mit der Flüssigkeit exotherm reagierenden Stoffmischung direkt unterhalb einer Bodenwandung 4B des Aufnahmebehälters so angeordnet, dass die bei der exothermen Reaktion entstehende Wärme direkt auf die Bodenwandung 4B übertragen werden kann. Wiederum enthält die Verpackung 15' mit der exotherm reagierenden Stoffgemisch einen Wasser enthaltenden Beutel 16' und wiederum sind der Beutel 16' und die die exotherm reagierende Stoffmischung enthaltende Verpackung 15' so angeordnet, dass durch einen Bedienereingriff durch die Bodenausnehmung 18 und ein Hochdrücken der Bodenwandung der Erhitzungskammer 3 mehrere Dorne 17` derart in den Wasser enthaltenden Beutel eingedrückt werden, dass dessen Wandung zerstört wird und das Wasser mit dem exotherm reagierenden Stoff in Kontakt treten kann. Bei dem in Figur 3 dargestellten Ausführungsbeispiel wird die Wärme der exothermen Reaktion direkt auf den Boden 4B des den Aufnahmeraum 1 enthaltenden Behälters übertragen. Die wärmeleitende Wandung 4 ist nur noch in einem Teil des Bodenbereichs 4B und an den Seitenwandungen 4A mit den Partikeln 6 des Granulats des Adsorptionsmittels besetzt. Der bei der exothermen Reaktion in dem Reaktionsraum 19' im Bodenbereich der Erhitzungskammer 3 entstehende Wasserdampf strömt (entlang der Pfeile 9) durch den gasgefüllten Raum 8 und gelangt zu den Partikeln 6 am Rand der Bodenwandung 4B sowie an den Seitenwandungen 4A.

Im Rahmen des Erfindungsgedankens sind zahlreiche alternative Ausführungsformen denkbar. Beispielsweise kann der Aufnahmeraum 1, der beispielsweise Lebensmittel 2 aufnimmt, auch relativ flach ausgebildet sein, so dass beispielsweise ein Fertiggericht oder ein flaches Gebäck (zum Beispiel eine Pizza) erhitzt werden kann.

Darüber hinaus ist die erfindungsgemäße Vorrichtung auch zum Erwärmen eines Stoffes oder Stoffgemischs geeignet, dass sich durch einen Aufnahmeraum 1 kontinuierlich hindurchbewegt. In diesem Fall kann der Aufnahmeraum 1 beispielsweise als Rohrleitung ausgebildet sein, die in dem Erhitzungsbereich von einer konzentrischen Rohrwand umgeben ist, wobei das Volumen zwischen den beiden konzentrischen Rohrwandungen als Erhitzungsraum 3 dient. Die innere Wandung ist auf ihrer Außenseite dann mit den Partikeln 6 des Adsorptionsmittels besetzt und ist gut wärmeleitend derart ausgebildet, dass die Wärme von dem Adsorptionsmittel über die Wandung zu dem inneren Aufnahmeraum übertragen wird.

Es sind auch Ausführungsformen denkbar, bei denen die auf ihrer Außenseite mit den Partikeln des Adsorptionsmittels bestückte Wandung 4 auf ihrer Innenseite nicht direkt in Kontakt mit dem zu erwärmenden Stoff oder Stoffgemisch 2 gelangt und bei denen stattdessen in den Aufnahmeraum 1 zunächst ein weiterer Behälter eingesetzt wird, dessen Außenwand sich an die Kontur der Innenseite der wärmeleitenden Wandung 4 anpasst. Dieser Behältereinsatz enthält dann den zu erwärmenden Stoff oder die zu erwärmende Stoffmischung, beispielsweise ein Fertiggericht.

Schließlich sind auch Ausführungsformen denkbar, bei denen nur die Seitenwandung des Aufnahmeraums 1 an ihrer dem Erhitzungsraum 3 zugewandten Seite mit den Partikeln 6 des Adsorptionsmittels besetzt sind und bei denen die Bodenwandung des Aufnahmeraums unmittelbar an den Reaktionsraum 19 angrenzt.

## Patentansprüche

1. Vorrichtung zum Erwärmen eines Stoffes oder Stoffgemischs, mit einem Aufnahmeraum (1) zum Aufnehmen des zu erwärmenden Stoffes oder Stoffgemischs (2) und einem an den Aufnahmeraum (1) angrenzenden Erhitzungsraum (3), der über eine gemeinsame wärmeleitende Wandung (4) mit dem Aufnahmeraum (1) thermisch gekoppelt und zugleich fluiddicht von diesem getrennt ist,
wobei der Erhitzungsraum (3) ein Granulat eines Adsorptionsmittels enthält, wobei sich das Adsorptionsmittel beim Einwirken eines Fluids erhitzt und dabei entstehende Wärme auf die Wandung (4) und von dieser auf den zu erwärmenden Stoff oder das zu erwärmende Stoffgemisch (2) übertragen wird,
**dadurch gekennzeichnet,**
**dass** die Oberfläche der wärmeleitenden Wandung (4) auf der Seite des Erhitzungsraums (3) mit Partikeln (6) des Granulats des Adsorptionsmittels besetzt ist, welche an der Oberfläche der Wandung (4) derart befestigt sind, dass benachbart zu der gesamten mit den Partikeln (6) besetzten Wandung (4) ein gasgefüllter Raum (8) innerhalb des Erhitzungsraums (3) verbleibt, durch den das Fluid an die Partikel (6) herangeführt werden kann, wobei sich die Partikel (6) erhitzen, und
**dass** die Vorrichtung eine Einrichtung (10-12; 15-18; 19) zum Erzeugen eines auf die Partikel (6) einwirkenden Fluidstroms (9) innerhalb des gasgefüllten Raums (8) aufweist.

2. Vorrichtung nach Anspruch 1, **dadurch gekennzeichnet, dass** der Erhitzungsraum eine im Wesentlichen geschlossene Erhitzungskammer (3) ist und dass der gasgefüllte Raum (8) ein spaltförmiger Raum ist, der zwischen der mit den Partikeln (6) besetzten Wandung (4) und einer äußeren Wandung (5) der Erhitzungskammer (3) angeordnet ist.

3. Vorrichtung nach Anspruch 1 oder 2, **dadurch gekennzeichnet, dass** die Einrichtung zum Erzeugen eines auf die Partikel einwirkenden Fluidstroms aufweist:
einen Reaktionsraum (19; 19`), der innerhalb des Erhitzungsraums (3) untergebracht ist, an den gasgefüllten Raum (8) angrenzt und einen Stoff oder ein Stoffgemisch (10; 15) enthält, der bzw. das bei Zufuhr einer Flüssigkeit in einer exothermen Reaktion Wärme erzeugt, wobei Wasserdampf gebildet wird, und
eine Vorrichtung (11, 12; 16, 17) zum Einbringen der Flüssigkeit in den Reaktionsraum (19; 19').

4. Vorrichtung nach Anspruch 3, **dadurch gekennzeichnet, dass** der Reaktionsraum eine Reaktionskammer (19) ist, die von dem den gasgefüllten Raum (8) und die Partikel (6) des Absorptionsmittels enthaltenden Teil des Erhitzungsraums (3) durch eine wasserdampfdurchlässige Wandung (13) getrennt ist.

5. Vorrichtung nach Anspruch 3 oder 4, **dadurch gekennzeichnet, dass** die in den Reaktionsraum (19; 19') einzubringende Flüssigkeit Wasser ist und dass der Stoff oder das Stoffgemisch (10; 15) in dem Reaktionsraum (19; 19'), der bzw. das bei Zufuhr der Flüssigkeit in einer exothermen Reaktion Wärme erzeugt, Calciumoxid umfasst.

6. Vorrichtung nach einem der Ansprüche 3 - 5, **dadurch gekennzeichnet,**
**dass** der Aufnahmeraum (1) der Innenraum eines topfförmigen Behälters ist,
**dass** die an den Erhitzungsraum (3) angrenzende wärmeleitende Wandung (4) die Bodenwandung (4B) und zumindest Teile der Seitenwandung (4A) des topfförmigen Behälters bildet,
**dass** die Oberfläche der Seitenwandung (4A) und eines Teils der oder der gesamten Bodenwandung (4B) mit den Partikeln (6) des Adsorptionsmittels besetzt ist.

7. Vorrichtung nach Anspruch 6, **dadurch gekennzeichnet, dass** ein Teil der Bodenwandung (4B) mit den Partikeln (6) des Adsorptionsmittels besetzt ist und der nicht von den Partikeln (6) des Adsorptionsmittels besetzte Teil oberhalb des Reaktionsraums (19') angeordnet ist.

8. Vorrichtung nach einem der Ansprüche 1 - 7, **dadurch gekennzeichnet, dass** das Adsorptionsmittel ein Zeolith ist und die Partikel (6) Zeolithkugeln oder -körner sind.

9. Vorrichtung nach Anspruch 8, **dadurch gekennzeichnet, dass** das an die Zeolithkugeln oder -körner (6) herangeführte Fluid Wasserdampf enthält.

10. Vorrichtung nach Anspruch 9, **dadurch gekennzeichnet, dass** die Zeolithkugeln oder -körner (6) bindemittelfrei sind und eine hohe Wasseraufnahmefähigkeit besitzen.

11. Vorrichtung nach einem der Ansprüche 8 - 10, **dadurch gekennzeichnet, dass** die Partikel (6) auf die Oberfläche der wärmeleitenden Wandung (4) aufgeklebt sind.

12. Vorrichtung nach Anspruch 11, **dadurch gekennzeichnet, dass** die Partikel (6) auf die Oberfläche der wärmeleitenden Wandung (4) mit einem Klebstoff (7) aufgeklebt sind, der im Wesentlichen wasser- und lösungsmittelfrei ist.

13. Vorrichtung nach Anspruch 11 oder 12, **dadurch gekennzeichnet, dass** die Partikel (6) derart aufgeklebt sind, dass der Klebstoff (7) nur einen geringen Teil der Oberfläche der Partikel (6) benetzt.

14. Vorrichtung nach einem der Ansprüche 1 - 13, **dadurch gekennzeichnet, dass** die Oberfläche der wärmeleitenden Wandung (4) einschichtig mit den Partikeln (6) derart besetzt ist, dass die Partikel (6) überwiegend nur nebeneinander auf der Oberfläche der wärmeleitenden Wandung (4) aufliegen.

15. Vorrichtung nach einem der Ansprüche 1 - 14, **dadurch gekennzeichnet, dass** der Stoff oder das Stoffgemisch (2), der bzw. das im Aufnahmeraum (1) zu erwärmen ist, ein Lebensmittel ist.
